# EUROPÄISCHE PATENTSCHRIFT

(11) **EP 2 616 266 B1**
(45) Veröffentlichungstag und Bekanntmachung des Hinweises auf die Patenterteilung: **13.08.2014**
(21) Anmeldenummer: 11725341.9
(22) Anmeldetag: 10.06.2011
(51) Int. Cl.: B60L 3/12, B60L 3/00

(54) **KRAFTWAGEN MIT EINER HOCHSPANNUNGSQUELLE**
VEHICLE COMPRISING A HIGH-VOLTAGE SOURCE
VÉHICULE À MOTEUR COMPRENANT UNE SOURCE DE HAUTE TENSION

(30) Priorität: 15.09.2010 DE 102010045501
(43) Veröffentlichungstag der Anmeldung: 24.07.2013
(73) Patentinhaber: Audi AG, 85045 Ingolstadt (DE)
(72) Erfinder: HOFMANN, Reinhard, 85110 Kipfenberg (DE)
(74) Vertreter: Herbst, Matthias Heinz
(86) Internationale Anmeldenummer: PCT/EP2011/002851
(87) Internationale Veröffentlichungsnummer: WO 2012/034609

(56) Entgegenhaltungen:
- JP-A- 11 266 502
- US-A1- 2007 222 413

## Beschreibung

Die Erfindung betrifft einen Kraftwagen mit einer Hochspannungsquelle nach dem Oberbegriff von Patentanspruch 1.

Zum Betreiben von elektrischen Maschinen von Elektrofahrzeugen und Hybridfahrzeugen sind Hochspannungsquellen zum Bereitstellen der benötigten elektrischen Energie notwendig. Unter Hochspannung sollen hier im Folgenden Spannungen von mehr als 60 V verstanden werden, welche bei Berührung ein beträchtliches Gesundheitsrisiko für Bedien- und Servicepersonen darstellen. Üblich sind derzeit Bordnetzspannungen von etwa 400 V, zur Begrenzung von im Betrieb eines solchen Kraftwagens im Hochspannungsbordnetz fließenden Strömen ist jedoch die Verwendung von noch höheren Spannungen wünschenswert.

Bei Servicearbeiten an einem derartigen Kraftwagen muss zuverlässig sichergestellt werden, dass die Hochspannungsquelle vom Hochspannungsbordnetz abgetrennt ist, um Gesundheitsrisiken für das Servicepersonal zu vermeiden. Üblicherweise weisen elektrische Kraftwagen daher einen sog. Servicestecker auf, durch dessen Entfernen das Hochspannungsbordnetz physikalisch unterbrochen wird, so dass kein Strom mehr fließen kann. Auch eine Unterbrechung des Hochspannungsbordnetzes durch Steuereinrichtungen, die die Hochspannungsquelle mittels eines oder mehrerer Schütze vom Hochspannungsbordnetz abtrennen, ist bekannt.

Um dem Servicepersonal anzuzeigen, dass die Hochspannungsquelle abgetrennt ist, ist üblicherweise eine Signallampe vorgesehen, die erlischt, sobald keine Spannung im Hochspannungsbordnetz mehr anliegt. Eine derartige Signallampe ermöglicht jedoch keine absolut sichere Anzeige des spannungsfreien Zustands des Hochspannungsbordnetzes, da der spannungsfreie Zustand nicht von einem Defekt der Signalleuchte unterscheidbar ist.

Aus der WO 99/50131 A1 ist ferner eine Batterie mit einem abschaltbaren Ausgang vorgesehen, die zudem eine Anzeigevorrichtung aufweist, die ein Signal abgibt, wenn vom spannungsführenden in den spannungsfreien Zustand und zurück umgeschaltet wird. Auch eine solche Anzeige ermöglicht keine zuverlässige Detektion des spannungsfreien Zustandes, sondern lediglich eines Zustandswechsels.

Ein Kraftwagen mit Hochspannungsquelle ist z.B. aus US 2007/222413 A1 bekannt.

Der vorliegenden Erfindung liegt somit die Aufgabe zugrunde, einen Kraftwagen der eingangs genannten Art bereitzustellen, welcher eine zuverlässige Anzeige des spannungsfreien Zustandes des Hochspannungsbordnetzes erlaubt.

Diese Aufgabe wird durch einen Kraftwagen mit den Merkmalen des Patentanspruchs 1 gelöst.

Der erfindungsgemäße Kraftwagen zeichnet sich durch eine Signalabgabevorrichtung aus, welche zum Abgeben eines vorbestimmten Signals aktiviert ist, wenn eine Hochspannungsquelle des Kraftwagens von einem Hochspannungsbordnetz des Kraftwagens getrennt ist, und welche deaktiviert ist, also das vorbestimmte Signal nicht abgibt oder abgeben kann, wenn die Hochspannungsquelle mit dem Hochspannungsbordnetz verbunden ist. Im Gegensatz zu aus dem Stand der Technik bekannten Kraftwagen wird also ein Signal abgegeben, solange Manipulationen am Hochspannungsbordnetz aufgrund dessen spannungsfreien Zustandes sicher sind. Ein Ausfall der Anzeigeeinrichtung führt hier zu keiner Gefährdung des Bedienpersonals, da dieses, solange die Signalabgabevorrichtung kein Signal abgibt, davon ausgehen muss, dass Manipulationen am Hochspannungsbordnetz nicht sicher sind.

In einer bevorzugten Ausführungsform der Erfindung ist die Signalabgabevorrichtung mit einem Kleinspannungsbordnetz verbunden. Hierbei kann es sich beispielsweise um ein vom Hochspannungsbordnetz getrenntes 12 V-Netz handeln. Die Signalabgabevorrichtung kann damit unabhängig vom Verbindungszustand der Hochspannungsquelle mit dem Hochspannungsbordnetz betrieben werden. Gleichzeitig ist eine Überprüfung der korrekten Funktion der Signalabgabevorrichtung gefährdungsfrei möglich, da an dieser keine gefährlichen Spannungen anliegen.

Das Kleinspannungsbordnetz umfasst vorzugsweise eine Messvorrichtung zum Messen einer Spannung im Hochspannungsbordnetz. Dies kann einerseits durch eine direkte Spannungsmessung mittels eines Voltmeters im Hochspannungsbordnetz erfolgen. Besonders sicher ist jedoch eine indirekte Überwachung des Hochspannungsbordnetzes, wie sie beispielsweise durch induktive Messgeräte erfolgen kann. Bei dieser Ausführungsform sind das Kleinspannungsbordnetz und das Hochspannungsbordnetz vollständig entkoppelt, so dass bei Manipulationen im Kleinspannungsbordnetz kein Risiko um der Berührung von hochspannungsführenden Teilen besteht.

Die Messvorrichtung ist vorzugsweise zum Senden von Signalen an eine Steuereinheit ausgelegt, welche in Abhängigkeit von den empfangenen Signalen die Signalabgabevorrichtung steuert. Die Steuereinheit kann hierbei auch weitere Informationen, beispielsweise über den Betriebszustand von Verbrauchern im Hochspannungsbordnetz verarbeiten, so dass eine zuverlässige Plausibilisierung der Spannungsmessung durchgeführt werden kann.

Die Signalabgabevorrichtung ist vorzugsweise als Signalleuchte, Signalleuchtdiode, oder dergleichen ausgebildet. Solche visuelle Signale sind vom Bedienpersonal besonders einfach zu erfassen und ermöglichen eine schnelle Überprüfung des Zustandes des Hochspannungsbordnetzes.

In einer weiteren bevorzugten Ausführungsform der Erfindung ist die Signalabgabevorrichtung an der Hochspannungsquelle selbst angeordnet. Bei Manipulationen am Hochspannungsbordnetz ist die Signalabgabevorrichtung daher immer im Blickfeld des Bedienpersonals, so dass dieses jederzeit über den sicheren bzw. unsicheren Zustand des Hochspannungsbordnetzes informiert ist.

Alternativ hierzu kann die Signalabgabevorrichtung auch im Bereich eines Servicesteckers zum Unterbrechen der Hochspannungsversorgung angeordnet sein. Bereits beim Ziehen des Servicesteckers erhält das Bedienpersonal daher eine zuverlässige Information, ob durch dessen Entfernung eine tatsächliche Unterbrechung des Hochspannungsbordnetzes erfolgt ist.

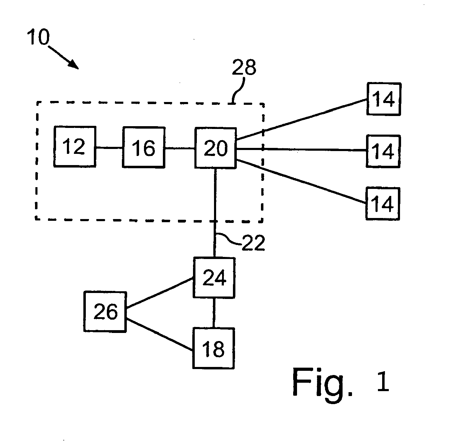

Im Folgenden wird die Erfindung und ihre Ausführungsformen anhand der Zeichnung näher erläutert.

Die einzige Figur zeigt hierbei eine schematische Darstellung eines Bordnetzes eines Ausführungsbeispiels eines erfindungsgemäßen Kraftwagens.

Ein im Ganzen mit 10 bezeichnetes Hochspannungsbordnetz eines Kraftwagens umfasst eine Hochspannungsquelle 12 in Form einer Batterie sowie mehrere Verbraucher 14, bei denen es sich beispielsweise um elektrische Antriebsaggregate, Klimageräte und dergleichen handeln kann. Die Hochspannungsquelle 12 stellt eine Spannung von mehr als 60 V, insbesondere von etwa 400 V bereit, die bei Berührung durch Bedienpersonal zu Gesundheitsschäden führen kann.

Um sichere Wartungsarbeiten am Hochspannungsbordnetz 10 und den Verbrauchern 14 zu ermöglichen, ist die Hochspannungsquelle 12 mittels eines Schützes 16 vom Hochspannungsbordnetz abtrennbar. Um die Sicherheit des Bedienpersonals zu gewährleisten, wird der abgetrennte Zustand der Batterie 12 durch eine Signalleuchte 18 angezeigt. Solange die Signalleuchte 18 ein Signal abgibt, sind also Manipulationen am Hochspannungsbordnetz 10 sicher. Der Zustand des Hochspannungsbordnetzes 10 wird hierbei durch einen Sensor 20 überwacht, bei dem es sich beispielsweise um ein Spannungsmessgerät handeln kann. Messwerte des Sensors 20 werden über einen Bus 22 an eine Steuereinheit 24 übertragen, die die Signalleuchte 18 ansteuert. Zur Versorgung der Signalleuchte 18 und der Steuereinheit 24 dient eine Kleinspannungsquelle 26, beispielsweise eine übliche 12 V-Batterie.

Um die Sicherheit weiter zu erhöhen, sind die Batterie 12, das Schütz 16 und der Sensor 20 in einem gemeinsamen Batteriegehäuse 28 verkapselt. Bei geöffnetem Schütz 16 sind daher alle außerhalb des Batteriegehäuses 28 angeordneten Komponenten des Hochspannungskreises 10 zuverlässig strom- und spannungsfrei, so dass Wartungsarbeiten an ihnen gefahrlos durchgeführt werden können.

Die Signalleuchte 18 kann beispielsweise direkt am Batteriegehäuse 28 angeordnet werden, so dass bei Manipulationen am Hochspannungsbordnetz das Signal immer im Blickfeld des Bedienpersonals liegt. Selbstverständlich sind auch andere Anbringungsorte der Signalleuchte 18 denkbar. Beispielsweise kann diese im Bereich eines Servicesteckers zum Unterbrechen des Hochspannungskreises 10 angeordnet werden. Auch die Verwendung mehrerer Signalleuchten 18 an unterschiedlichen Positionen des Kraftwagens ist möglich, wobei es insbesondere zweckmäßig ist, wenn von jeder Position, die das Bedienpersonal zum Durchführen von Arbeiten am Hochspannungsbordnetz 10 einnehmen muss, wenigstens eine Signalleuchte 18 einsehbar ist, so dass bei jedem Arbeitsschritt überprüft werden kann, ob das Hochspannungsbordnetz 10 tatsächlich spannungsfrei ist.

## Patentansprüche

1. Kraftwagen mit einer Hochspannungsquelle (12) zum Versorgen von Verbrauchern (14) eines Hochspannungsbordnetzes (10) mit elektrischer Energie, welche mittels einer elektrischen Trennvorrichtung (16) vom Hochspannungsbordnetz (10) elektrisch abtrennbar ist, sowie mit einer Signalabgabevorrichtung (18) zum Anzeigen eines Verbindungszustandes der Hochspannungsquelle (12) mit dem Hochspannungsbordnetz (10),
**dadurch gekennzeichnet, dass**
die Signalabgabevorrichtung (18) zum Abgeben eines vorbestimmten Signals aktiviert ist, wenn die Hochspannungsquelle (12) vom Hochspannungsbordnetz (10) getrennt ist und das Hochspannungsbordnetz (10) spannungsfrei ist, und deaktiviert ist, also das vorbestimmte Signal nicht abgibt oder nicht abgeben kann, wenn die Hochspannungsquelle (12) mit dem Hochspannungsbordnetz (10) verbunden ist und das Hochspannungsbordnetz (10) nicht spannungsfrei ist.

2. Kraftwagen nach Anspruch 1,
**dadurch gekennzeichnet, dass**
die Signalabgabevorrichtung (18) mit einem Kleinspannungsbordnetz verbunden ist.

3. Kraftwagen nach Anspruch 2,
**dadurch gekennzeichnet, dass**
das Kleinspannungsbordnetz eine Messvorrichtung (20) zum Messen einer Spannung im Hochspannungsbordnetz (10) aufweist.

4. Kraftwagen nach Anspruch 3,
**dadurch gekennzeichnet, dass**
die Messvorrichtung (20) zum Senden von Signalen an eine Steuereinheit (24) ausgelegt ist, welche in Abhängigkeit von den empfangenen Signalen die Signalabgabevorrichtung (18) steuert.

5. Kraftwagen nach einem der Ansprüche 1 bis 4,
**dadurch gekennzeichnet, dass**
die Signalabgabevorrichtung (18) als Signalleuchte, Signalleuchtdiode, oder dgl. ausgebildet ist.

6. Kraftwagen nach einem der Ansprüche 1 bis 5,
**dadurch gekennzeichnet, dass**
die Signalabgabevorrichtung (18) an der Hochspannungsquelle (12) angeordnet ist.

7. Kraftwagen nach einem der Ansprüche 1 bis 5,
**dadurch gekennzeichnet, dass**
die Signalabgabevorrichtung (18) im Bereich eines Servicesteckers zum Unterbrechen der Hochspannungsversorgung angeordnet ist.

## Claims

1. Motor vehicle having a high-voltage source (12) for supplying consumers (14) of an on-board high-voltage power supply system (10) with electrical energy, which can be electrically disconnected from the on-board high-voltage power supply system (10) by means of an electrical disconnection device (16), and having a signal emission device (18) for displaying a connection state of the high-voltage source (12) with the on-board high-voltage power supply system (10), **characterised in that** the signal emission device (18) is activated to emit a predetermined signal when the high-voltage source (12) is separated from the on-board high-voltage power supply system (10) and the on-board high-voltage power supply system (10) has zero voltage, and is deactivated, i.e. does not or cannot emit the predetermined signal, when the high-voltage source (12) is connected to the on-board high-voltage power supply system (10) and the on-board high-voltage power supply system (10) is not at zero voltage.

2. Motor vehicle according to claim 1, **characterised in that** the signal emission device (18) is connected to an on-board low-voltage power supply system.

3. Motor vehicle according to claim 2, **characterised in that** the on-board low-voltage power supply system comprises a measuring device (20) for measuring a voltage in the on-board high-voltage power supply system (10).

4. Motor vehicle according to claim 3, **characterised in that** the measuring device (20) is configured for sending signals to a control unit (24) which controls the signal emission device (18) depending on the signals received.

5. Motor vehicle according to one of claims 1 to 4, **characterised in that** the signal emission device (18) is configured as a signal lamp, a signal light emitting diode or the like.

6. Motor vehicle according to one of claims 1 to 5, **characterised in that** the signal emission device (18) is arranged on the high-voltage source (12).

7. Motor vehicle according to one of claims 1 to 5, **characterised in that** the signal emission device (18) is arranged in the region of a service plug for interrupting the high-voltage power supply.

## Revendications

1. Véhicule à moteur équipé d'une source de haute tension (12) servant à alimenter en énergie électrique des consommateurs (14) d'un réseau de bord à haute tension (10), laquelle source de haute tension peut être isolée électriquement du réseau de bord à haute tension (10) au moyen d'un dispositif d'isolation (16) électrique, et équipé également d'un dispositif d'émission de signaux (18) servant à afficher un état de connexion entre la source de haute tension (12) et le réseau de bord à haute tension (10),
**caractérisé en ce**
**que** le dispositif d'émission de signaux (18) servant à émettre un signal prédéterminé est activé lorsque la source de haute tension (12) est isolée du réseau de bord à haute tension (10) et que le réseau de bord à haute tension (10) n'est pas sous tension, et en ce qu'il est désactivé, donc n'émet pas ou ne peut pas émettre le signal prédéterminé, lorsque la source de haute tension (12) est connectée au réseau de bord à haute tension (10) et que le réseau de bord à haute tension (10) est sous tension.

2. Véhicule à moteur selon la revendication 1,
**caractérisé en ce**
**que** le dispositif d'émission de signaux (18) est connecté à un réseau de bord à basse tension.

3. Véhicule à moteur selon la revendication 2,
**caractérisé en ce**
**que** le réseau de bord à basse tension présente un dispositif de mesure (20) servant à mesurer une tension dans le réseau de bord à haute tension (10).

4. Véhicule à moteur selon la revendication 3,
**caractérisé en ce**
**que** le dispositif de mesure (20) est configuré pour envoyer des signaux à une unité de commande (24), qui commande le dispositif d'émission de signaux (18) en fonction des signaux reçus.

5. Véhicule à moteur selon l'une quelconque des revendications 1 à 4,
**caractérisé en ce**
**que** le dispositif d'émission de signaux (18) est réalisé sous la forme d'un avertisseur lumineux, d'une diode d'avertisseur lumineux ou similaire.

6. Véhicule à moteur selon l'une quelconque des revendications 1 à 5,
**caractérisé en ce**
**que** le dispositif d'émission de signaux (18) est disposé au niveau de la source de haute tension (12).

7. Véhicule à moteur selon l'une quelconque des revendications 1 à 5,
**caractérisé en ce**
**que** le dispositif d'émission de signaux (18) est disposé dans la zone d'un connecteur de service servant à interrompre l'alimentation en haute tension.
